# EUROPEAN PATENT APPLICATION

(11) **EP 1 950 911 A1**
(43) Date of publication of application: **30.07.2008**
(21) Application number: 08150397.1
(22) Date of filing: 18.01.2008
(51) Int. Cl.: H04L 12/24, G01D 4/00

(54) **Building management system**

(30) Priority: 26.01.2007 KR 20070008562
(71) Applicant: LG Electronics Inc., Seoul, 150-721 (KR)
(72) Inventor: Kim, Ki-Bum, Seoul (KR); Youn, Sang-Chul, Seoul (KR); Jeon, Duck-Gu, Seoul (KR)
(74) Representative: Vossius & Partner

(57) **Abstract**

Disclosed is a building management system which includes a BACnet gateway including a protocol converter which receives data in a remote communication protocol format and converts the data according to a BACnet communication protocol, a central controller which connects to the BACnet gateway and controls a sub-system of a building, and a watt-hour meter which measures a wattage of the sub-system and transmits wattage data to the protocol converter using the remote communication protocol format.

## Description

This application claims the benefit of Korean Application No. 10-2007-0008562, filed on January 26, 2007, which is hereby incorporated by reference in its entirety.

The present invention relates to a building management system and, more particularly, to a building management system that performs unified (collective) controlling through a BACnet (Building Automation and Control network).

Recently, as the facilities of buildings are being modernized, an automatic control system for automatically controlling sub-systems such as a power management system, an illumination system, an air-conditioning system, a disaster prevention system and a security management system installed in buildings is increasingly used, and a building management system that can integrally (collectively) manage the sub-systems is being actively developed.

In operating such a building management system, BACnet is employed as a reliable communication protocol for sharing various information required for controlling and monitoring the sub-systems.

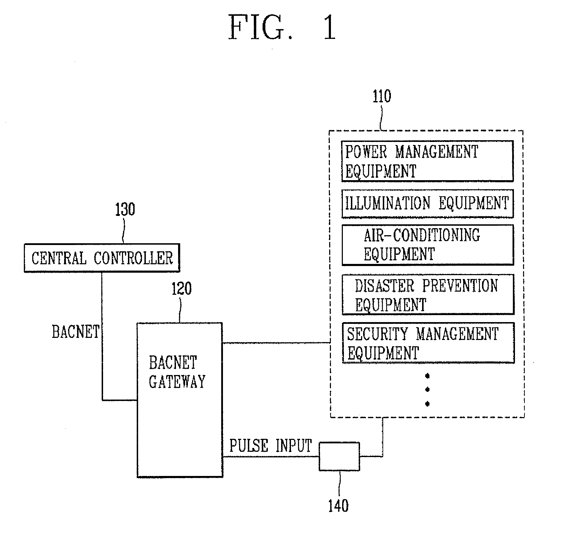

With reference to FIG. 1, a related art building management system includes various sub-systems 1I0 such as a power management system, an illumination system, an air-conditioning system, a disaster prevention system and a security management system accommodated in a building, a central controller 130 which is connected with the sub-systems 110 via a BACnet gateway 120 and centrally controls the sub-systems 110, and a watt-hour meter 140, connected to the BACnet gateway 120, that calculates a wattage (an amount of electrical power) of the sub-systems 110 and transfers wattage information to the BACnet gateway 120 via digital pulse input communication.

In the building management system, the central controller 130 is connected with the sub-systems 110 via the BACnet gateway 120 based on a BACnet protocol, and controls the sub-systems 110. The wattage of the sub-systems 110 is measured by the watt-hour meter 140, converted into a pulse signal, and inputted to the BACnet gateway 120 via a port. The BACnet gateway 120 processes the received pulse signal and transfers the wattage information to the central controller 130 via the BACnet protocol.

However, the related art building management system has at least the following problems. Since digital pulse transmissions can only be sent over short distances, if the watt-hour meter 140 is directly connected to the BACnet gateway 120, the watt-hour meter 140 must be installed near the BACnet gateway 120.

Further, although a BACnet module can be installed between the watt-hour meter 140 and the BACnet gateway 120 to allow the watt-hour meter 140 to be installed far away from the BACnet gateway 120, this causes an increase in installation cost and is inconvenient for a person who installs such arrangement.

One of the features of the present invention is that it allows a building control system to receive wattage information from a watt-hour meter located at a long distance from a BACnet gateway at a minimal installation cost.

This feature may be achieved by a BACnet gateway which includes a protocol converter which receives data in a remote communication protocol format, and converts the data according to a BACnet communication protocol.

The BACnet gateway also includes a port which receives digital pulse signals. The remote communication protocol may be an RS-485 communication protocol.

Also disclosed is a building management system which includes a BACnet gateway including a protocol converter which receives data in a remote communication protocol format and converts the data according to a BACnet communication protocol, a central controller which connects to the BACnet gateway and controls a sub-system of a building, and a watt-hour meter which measures a wattage of the sub-system and transmits wattage data to the protocol converter using the remote communication protocol format.

The remote communication protocol may be an RS-485 communication protocol. The BACnet gateway may also include a port which receives digital pulse signals. The building management system may include a watt-hour meter which measures a wattage of a sub-system of the building and transmits wattage data to the port using digital pulse signals.

Also disclosed is a method of managing building sub-systems which includes measuring, by a first watt-hour meter, a wattage of a building sub-system, transmitting wattage data of the first watt-hour meter to a protocol converter of a BACnet gateway using a remote communication protocol, converting the wattage data to a BACnet communication protocol, and transmitting the converted wattage data to a central controller.

The method may also include controlling the sub-system, by the central controller, based on the converted wattage data., measuring, by a second watt-hour meter, a wattage of a building sub-system, and transmitting wattage data of the second watt-hour meter to a port of the BACnet gateway using digital pulse signals. The remote communication protocol may be an RS-485 communication protocol.

The foregoing and other objects, features, aspects and advantages of the present invention will become more apparent from the following detailed description of the present invention when taken in conjunction with the accompanying drawings.

FIG. 1 is a view showing the construction of a building management system according to the related art;
FIG. 2 is a view showing the construction of a building management system according to an exemplary embodiment of the present invention; and
FIG. 3 is a schematic block diagram showing the construction of the building management system according to the exemplary embodiment of the present invention.

A building management system according to an exemplary embodiment of the present invention will now be described with reference to the accompanying drawings.

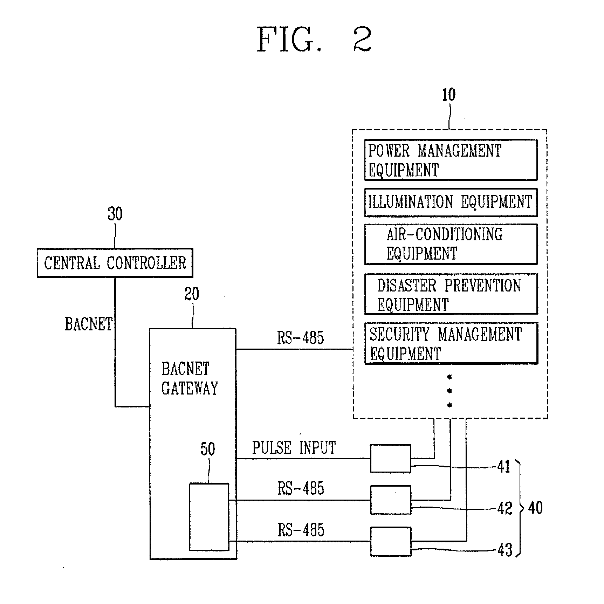

As shown in FIG. 2, the building management system according to an exemplary embodiment of the present invention includes at least one sub-system 10 such as a power management system, an illumination system, an air-conditioning system, a disaster prevention system, a security management system and the like accommodated in a building, a central controller 30 connected with the sub-systems 10 via a BACnet gateway 20 and controlling the sub-systems 10, at least one watt-hour meter 40 connected with a sub-system 10 and calculating a wattage of a sub-system 10, and a protocol conversion unit 50 provided in the BACnet gateway 20 that converts a communication protocol of data communicated with the watt-hour meter 40 to a BACnet communication protocol.

The central controller 30 connects to a port of the BACnet gateway 20 using a BACnet protocol, and centrally controls at least one sub-system 10 via the BACnet gateway 20. The BACnet gateway 20 and the sub-systems 10 may be connected according to various communication protocols, such as, for example, an RS-485 communication protocol, which is a communication protocol standard that allows transmission of data over long distances.

The watt-hour meters 40 connected to the sub-systems 10 may include one or more watt-hour meters of a first type, which output wattage information as digital pulse signals, and/or one or more watt-hour meters of a second type, which output wattage information using a remote communication protocol. In the example illustrated in FIG. 2, one watt-hour meter 41 of the first type and two watt-hour meters 42, 43 of the second type are connected to the sub-systems 10.

The first type watt-hour meter 41 is connected with the BACnet gateway 20 via a pulse input port provided at the BACnet gateway 20 and transfers data regarding the measured wattage to the BACnet gateway 20 as a pulse signal. The second type watt-hour meters 42 and 43 are connected with the protocol conversion unit 50 according to a remote communication protocol and transfer data regarding the measured wattage to the protocol conversion unit 50. Here, the second type watt-hour meters 42 and 43 and the protocol conversion unit 50 may be connected according to various communication protocols, such as the RS-485 communication protocol.

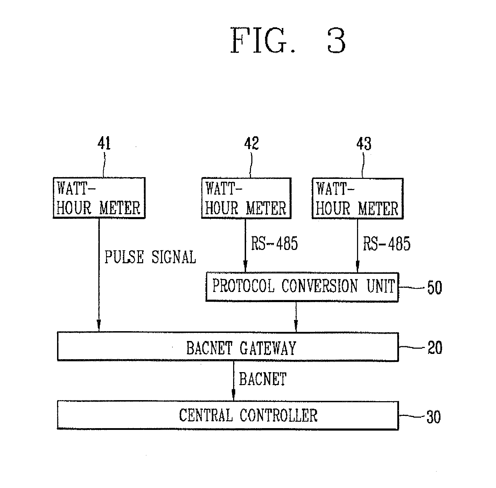

As shown in FIG. 3, the protocol conversion unit 50 is connected with the second type watt-hour meters 42 and 43 to receive data regarding the wattage from the second type watt-hour meters 42 and 43, and converts the received data from the remote communication protocol to a BACnet communication protocol.

With reference to FIG. 2, in the building management system according to the exemplary embodiment of the present invention, when sub-systems 10 are operated according to operation control signals from the central controller 30 or other settings, watt-hour meters 40 measure the wattage of the sub-systems 10. Data regarding the wattage may be measured by a first type watt-hour meter 41 and transferred to the central controller 30 via the pulse input port of the BACnet gateway 20.

Data regarding the wattage may also be measured by second type watt-hour meters 42 and 43 and transferred to the protocol conversion unit 50 according to a remote communication protocol. The protocol conversion unit 50 converts the wattage data from the remote communication protocol to a BACnet communication protocol, and transfers the converted data to the central controller 30 via the BACnet gateway 20. Then, the central controller 30 centrally controls the respective sub-systems 10.

As so far described, the building management system according to the present invention has the following advantages.

That is, because the protocol conversion unit 50, which converts data transmitted by the watt-hour meters 42 and 43 according to a remote communication protocol, is provided in the BACnet gateway 20, remote data transmission and reception can be performed with the watt-hour meters 42 and 43. Thus, there is practically no limitation in the installation positions or locations of the BACnet gateway 20 and the watt-hour meters 42 and 43.

In addition, the features of the present invention can be implemented or applied with ease, because the existing construction allowing transmission and reception with the watt-hour meter 41, which transmits digital pulse signals, may be kept basically intact, and the protocol conversion unit 50 can be added in a relatively simple manner. Thus, both the watt-hour meter 41 employing digital pulse transmission and the watt-hour meters 42 and 43 employing a remote protocol communication protocol can be applicable, so monitoring can be performed with various types of watt-hour meters.

## Claims

1. A BACnet gateway, comprising:
a protocol converter which receives data in a remote communication protocol format, and converts the data according to a BACnet communication protocol.

2. A BACnet gateway according to claim 1, further comprising a port which receives digital pulse signals.

3. A BACnet gateway according to claim 1, wherein the remote communication protocol is an RS-485 communication protocol.

4. A building management system, comprising:
a BACnet gateway comprising a protocol converter which receives data in a remote communication protocol format, and converts the data according to a BACnet communication protocol;
a central controller which connects to the BACnet gateway and controls a sub-system of a building; and
a watt-hour meter which measures a wattage of the sub-system and transmits wattage data to the protocol converter using the remote communication protocol format.

5. A building management system according to claim 4, wherein the remote communication protocol is an RS-485 communication protocol.

6. A building management system according to claim 4, wherein the BACnet gateway further comprising a port which receives digital pulse signals.

7. A building management system according to claim 6, further comprising a watt-hour meter which measures a wattage of a sub-system of the building and transmits wattage data to the port using digital pulse signals.

8. A method of managing building sub-systems, comprising:
measuring, by a first watt-hour meter, a wattage of a building sub-system;
transmitting wattage data of the first watt-hour meter to a protocol converter of a BACnet gateway using a remote communication protocol;
converting the wattage data to a BACnet communication protocol; and
transmitting the converted wattage data to a central controller.

9. A method according to claim 8, further comprising controlling the sub-system, by the central controller, based on the converted wattage data.

10. A method according to claim 8, further comprising measuring, by a second watt-hour meter, a wattage of a building sub-system; and
transmitting wattage data of the second watt-hour meter to a port of the BACnet gateway using digital pulse signals

11. A method according to claim 8, wherein the remote communication protocol is an RS-485 communication protocol.
